(19) Europäisches Patentamt
European Patent Office
Office européen des brevets

(11) **EP 4 672 439 A1**

(12) **EUROPEAN PATENT APPLICATION**

(43) Date of publication:
**31.12.2025 Bulletin 2026/01**

(21) Application number: **25184116.9**

(22) Date of filing: **20.06.2025**

(51) International Patent Classification (IPC):
*H01M 50/107* (2021.01)          *H01M 50/152* (2021.01)
*H01M 50/171* (2021.01)          *H01M 50/184* (2021.01)
*H01M 50/186* (2021.01)

(52) Cooperative Patent Classification (CPC):
**H01M 50/152; H01M 50/107; H01M 50/171;
H01M 50/184; H01M 50/186;** H01M 50/167

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.06.2024 KR 20240085440**

(71) Applicant: **SAMSUNG SDI CO., LTD.**
**Yongin-si, Gyeonggi-do 17084 (KR)**

(72) Inventors:
• **MOON, Sang Hyup**
  **16678 Suwon-si (KR)**
• **PARK, Keun Woo**
  **16678 Suwon-si (KR)**

(74) Representative: **Marks & Clerk LLP**
**15 Fetter Lane**
**London EC4A 1BW (GB)**

(54) **CAP ASSEMBLY AND SECONDARY BATTERY**

(57)    A cap assembly includes a cap down, a vent above the cap down, and an insulator between the cap down and the vent, the insulator including one or more protrusions protruding toward the vent. A secondary battery includes a case accommodating an electrode assembly, and a cap assembly coupled to an opening of the case, wherein the cap assembly includes a cap down, a vent above the cap down, and an insulator between the cap down and the vent, the insulator including one or more protrusions protruding toward the vent.

240      **FIG. 4**

EP 4 672 439 A1

**(Cont. next page)**

# FIG. 6

**Description**

BACKGROUND

1. Field

The present disclosure relates to a cap assembly and a secondary battery including the cap assembly.

2. Description of the Related Art

Secondary batteries are batteries that can be charged and discharged unlike primary batteries that cannot be charged. Low-capacity secondary batteries are used in small portable electronic devices such as smartphones, feature phones, laptop computers, digital cameras, and camcorders, and large-capacity secondary batteries are widely used as power sources for driving motors and power storage batteries in hybrid electric vehicles, electric vehicles, etc.

A secondary battery may include electrodes including a positive electrode and/or a negative electrode, an electrode assembly including the electrodes, a case that accommodates the electrode assembly, and a cap assembly coupled to an opening of the case to seal the case.

The cap assembly has a problem that it cannot properly seal the case when components are not properly assembled. For example, when the assembly of the components becomes loose or cracks occur in the vent, the cap down, or the like during the assembly process, there is a problem that the reliability and stability of the secondary battery are lowered.

The above information disclosed in this Background section is for enhancement of understanding of the background of the present disclosure, and therefore, it may contain information that does not constitute the related art.

SUMMARY

One or more embodiments of the present disclosure relate to a cap assembly and/or a secondary battery that increase binding strength between components included in the cap assembly.

One or more embodiments of the present disclosure relate to a cap assembly and/or secondary battery that are capable of preventing cracking inside a cap assembly.

However, objects of the present disclosure are not limited to the above-described objects, and other objects that are not specifically mentioned herein will be clearly understood by those skilled in the art from the description of the present disclosure below.

Embodiments include a cap assembly, including a cap down, a vent above, e.g. positioned above, the cap down, and an insulator between, e.g. positioned between, the cap down and the vent, the insulator including one or more protrusions protruding toward the vent.

The insulator may include a main body having a ring shape, the main body surrounding an outer circumferential surface of the vent, and the one or more protrusions may protrude from the main body.

Each of the one or more protrusions may have a thickness of 10% to 30% of a height of the main body.

The cap down and the vent may be coupled by the insulator, the vent being rotatable with respect to the cap down.

The one or more protrusions may be movable, the one or more protrusions being in a void between the main body and the vent.

A lower side of each of the one or more protrusions connected to the main body may be wider than an upper side of each of the one or more protrusions.

A sum of lengths of the lower side of each of the one or more protrusions may range from 60% to 80% of a length of a circumference of an inner circumferential surface of the main body.

Each of the one or more protrusions may have a thickness of 0.07 mm or more.

The one or more protrusions may include 4 to 16 protrusions.

Embodiments include a secondary battery, including a case configured to accommodate an electrode assembly, and a cap assembly coupled to an opening of the case, wherein the cap assembly includes a cap down, a vent above, e.g. positioned above, the cap down, and an insulator between, e.g. positioned between, the cap down and the vent, the insulator including one or more protrusions protruding toward the vent.

The insulator may include a main body having a ring shape, the insulator surrounding an outer circumferential surface of the vent, and each of the one or more protrusions may protrude from the main body.

The cap down and the vent may be coupled by the insulator, the vent being rotatable with respect to the cap down.

The one or more protrusions may be movable, the one or more protrusions being in a void between the main body and the vent.

A lower side of each of the one or more protrusions connected to the main body may be wider than an upper side of each of the one or more protrusions.

A sum of lengths of the lower side of each of the one or more protrusions ranges from 60% to 80% of a length of a circumference of an inner circumferential surface of the main body.

At least some of the above and other features of the invention are set out in the claims.

BRIEF DESCRIPTION OF THE DRAWINGS

Features will become apparent to those of ordinary skill in the art by describing in detail example embodiments with reference to the attached drawings, in which:

FIG. 1 is a schematic cross-sectional view illustrating a cylindrical secondary battery according to an embodiment of the present disclosure;

FIG. 2 is a schematic cross-sectional view illustrating a cap assembly according to an embodiment of the present disclosure;

FIG. 3 is a schematic cross-sectional view illustrating part of the cap assembly including an insulator according to an embodiment of the present disclosure;

FIG. 4 is a schematic top perspective view illustrating the insulator according to an embodiment of the present disclosure;

FIG. 5 is a schematic top view illustrating the insulator according to an embodiment of the present disclosure;

FIG. 6 is a schematic cross-sectional view illustrating a cap assembly including the insulator according to an embodiment of the present disclosure;

FIG. 7 is a schematic top perspective view illustrating an insulator according to another embodiment of the present disclosure;

FIG. 8 is a schematic top perspective view illustrating an insulator according to another embodiment of the present disclosure; and

FIG. 9 is a graph that compares binding strengths between a vent and a cap down according to the number of protrusions in the cap assembly to which the insulator according to an embodiment of the present disclosure is applied.

DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

In addition, when used in the present specification, "comprise" and "include" and/or "comprising" and "including" specify the presence of the stated features, numbers, steps, operations, members, elements, and/or groups thereof and do not preclude the presence or addition of one or more other features, numbers, operations, members, elements, and/or groups thereof.

When two compared objects are "the same," it means that they are "substantially the same." Accordingly, "substantially the same" may include a deviation that is considered low in the art, for example, a deviation within 5%. **In** addition, when a certain parameter is referred to as being uniform in a given region, it may mean that it is uniform in terms of an average.

Although "first," "second," and the like are used to describe various components, these components are not limited by these terms. These terms are used only to distinguish one component from another, and unless otherwise stated, it goes without saying that a first component may be a second component.

Throughout the specification, unless otherwise stated, each element may be singular or plural.

When any component is disposed "above (or below)" a component or "on (or under)" the component, it may mean not only that any component is disposed in contact with an upper surface (or lower surface) of the component, but also that another component may be interposed between the component and any component disposed on (or under) the component.

In addition, when a first component is described as being "connected," "coupled," or "joined" to a second component, the components may be directly connected or joined, but it should be understood that a third component may be "interposed" between the components, or the components may be "connected," "coupled," or "joined" through the third component. In addition, when a first component is described as being "electrically coupled to" a second component, this includes not only a case in which the first component is "directly coupled" to the second component, but also a case in which the first component is "coupled" to the second component with a third component interposed therebetween.

When referring to "A and/or B" throughout the specification, this means A, B or A and B unless otherwise specified. In other words, the term "and/or" includes all or any combination of the plurality of listed items. When referring to "C to D," this means C or more and D or less unless otherwise specified.

Terminology used herein is intended to describe embodiments of the present disclosure and is not intended to limit the present disclosure.

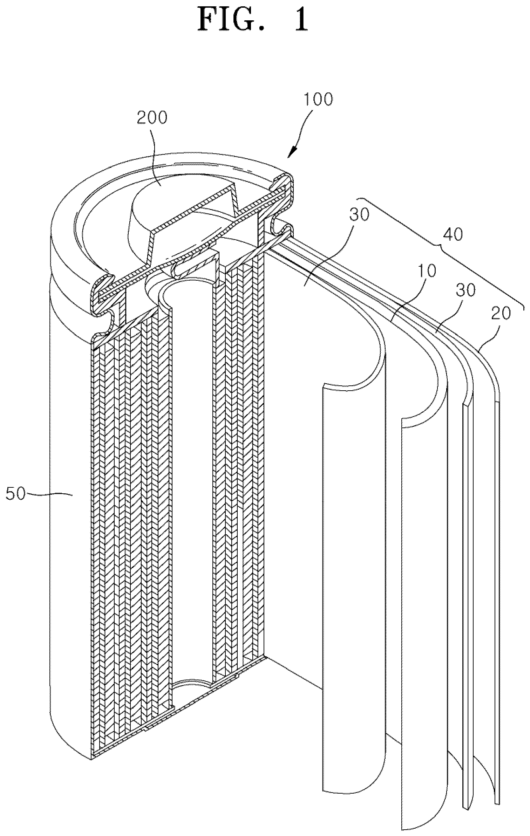

FIG. 1 is a schematic cross-sectional view illustrating a cylindrical secondary battery 100 according to an embodiment of the present disclosure.

As illustrated in FIG. 1, cylindrical lithium-ion secondary battery 100 includes a case 50, an electrode assembly 40, and a cap assembly 200. In addition, the cylindrical lithium-ion secondary battery 100 may further include a center pin in some embodiments. In addition, in the cylindrical lithium-ion secondary battery 100 according to the embodiment of the present disclosure, since the cap assembly 200 performs a current interrupt operation, the cap assembly 200 may be referred to as a current interrupt device in some cases.

The cylindrical case 50 may include a substantially circular bottom portion and a cylindrical side wall that extends upward a predetermined length from a circumferential surface of the bottom portion. During a manufacturing process of the secondary battery 100, the top (in the orientation shown) of the cylindrical case 50 is open. Therefore, during an assembly process of the secondary battery 100, the electrode assembly 40 and the center pin may be inserted into the cylindrical case 50 together with an electrolyte. The cylindrical case 50 may be formed of, for example, steel, stainless steel, aluminum, an aluminum alloy, or an equivalent thereof.

The electrode assembly 40 may be accommodated inside the cylindrical case 50. The electrode assembly 40 may include a negative electrode 20 in which a negative current collection plate is coated with a negative electrode active material (e.g., graphite, carbon, etc.), a positive electrode 10 in which a positive electrode current collection plate is coated with a positive electrode active material (e.g., transition metal oxide ($LiCoO_2$, $LiNiO_2$, $LiMn_2O_4$, etc.)), and a separator 30 positioned between the negative electrode 20 and the positive electrode 10 to prevent a short circuit and enable only the movement of lithium ions. In addition, the negative electrode 20, the positive electrode 10, and the separator 30 may be wound in a substantially cylindrical shape.

The cap assembly 200 includes a cap up 210. The cap assembly 200 further includes a cap down 230, a vent 220, and an insulator 240. The cap assembly 200 is coupled to the opening of the cylindrical case 50 to seal the electrode assembly 40 inside the cylindrical case 50.

However, the case may be formed in any of various shapes such as a circular shape, a pouch shape, etc. In addition, the case may be formed of a metal such as aluminum, an aluminum alloy, nickel-plated steel, or a laminate film or plastic that forms a pouch.

As described above, the electrode assembly 40 includes the negative electrode 20, the positive electrode 10, and the separator 30 positioned between the negative electrode 20 and the positive electrode 10. In addition, the electrode assembly 40 is stored in the cylindrical case 50 together with an electrolyte (e.g., added after closing the case). Hereinafter, the electrode assembly 40 and the electrolyte will be described.

## Positive electrode

As the positive electrode active material, a compound capable of reversibly intercalating/deintercalating lithium (e.g., a lithiated intercalation compound) may be used. Specifically, at least one of a composite oxide of lithium and a metal selected from cobalt, manganese, nickel, and a combination thereof may be used.

The composite oxide may be a lithium transition metal composite oxide, and specific examples thereof may include a lithium nickel oxide, a lithium cobalt oxide, a lithium manganese oxide, a lithium iron phosphate compound, a cobalt-free nickel-manganese oxide, and a combination thereof.

As an example, a compound represented by any one of the following formulas may be used: $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

In the above chemical formula, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode 10 for a cylindrical lithium-ion secondary battery 100 may include a current collector and a positive electrode active material layer formed on the current collector. The positive electrode active material layer may include a positive electrode active material and may further include a binder and/or a conductive material.

The content of the positive electrode active material may be in a range of 90 wt% to 99.5 wt% with respect to 100 wt% of the positive electrode active material layer, and the content of each of the binder and the conductive material is in a range of 0.5 wt% to 5 wt% with respect to 100 wt% of the positive electrode active material layer.

Al may be used for the current collector, but the present disclosure is not limited thereto.

## Negative electrode

The negative electrode active material includes a material capable of reversibly intercalating/deintercalating lithium ions, a lithium metal, an alloy of lithium metal, a material capable of doping and dedoping lithium, or a transition metal oxide.

The material capable of reversibly intercalating/deintercalating lithium ions may be a carbon negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon or hard carbon, a meso-phase pitch carbide, sintered coke, and the like.

A Si negative electrode active material or a Sn negative electrode active material may be used for the material capable of being doped and undoped with lithium. The Si negative electrode active material may be silicon, a silicon-carbon composite, $SiO_x$ (0<x≤2), a Si alloy, or a combination thereof.

The silicon-carbon composite may be a composite of silicon and amorphous carbon. According to an embodiment, the silicon-carbon composite may be in the form of a silicon particle and amorphous carbon with which the surface of the silicon particle is coated.

The silicon-carbon composite may further include crystalline carbon. For example, the silicon-carbon composite may include a core including crystalline carbon and silicon particle and an amorphous carbon coating layer on the surface of the core.

The negative electrode 20 for the cylindrical lithium-ion secondary battery 100 includes a current collector and a negative electrode active material layer formed on the current collector. The negative electrode active material layer includes a negative electrode active material and may further include a binder and/or a conductive material.

For example, the negative electrode active material layer may include 90 wt % to 99 wt % of a negative electrode active material, 0.5 wt % to 5 wt % of a binder, and 0 wt % to 5 wt % of a conductive material.

A non-aqueous binder, an aqueous binder, a dry binder, or a combination thereof may be used for the binder. When an aqueous binder is used for the negative electrode binder, a cellulose compound capable of imparting viscosity may be further included.

As the negative electrode current collector, one selected from copper foil, nickel foil, stainless steel foil, titanium foil, nickel foam, copper foam, conductive metal-coated polymer substrate, and a combination thereof may be used.

An electrolyte for the cylindrical lithium-ion secondary battery 100 includes a non-aqueous organic solvent and a lithium salt.

The non-aqueous organic solvent acts as a medium through which ions involved in the electrochemical reaction of the battery can move.

The non-aqueous organic solvent may be a carbonate, ester, ether, ketone, alcohol, aprotic solvent, or a combination thereof and may be used alone or in combination of two or more thereof.

In addition, when a carbonate solvent is used, a mixture of cyclic carbonate and chain carbonate may be used.

## Separator

Depending on the type of the cylindrical lithium-ion secondary battery 100, the separator 30 may be present between the positive electrode 10 and the negative electrode 20. As the separator 30, polyethylene, polypropylene, polyvinylidene fluoride, or a multilayer film including two or more layers thereof may be used.

The separator 30 may include a porous substrate and a coating layer including an organic material, an inorganic material, or a combination thereof, which is positioned on one surface or both surfaces of the porous substrate.

The organic material may include a polyvinylidene fluoride polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be present by being mixed in one coating layer or may be present in the form of a coating layer including (or containing) an organic material and a coating layer including (or containing) an inorganic material that are stacked on each other.

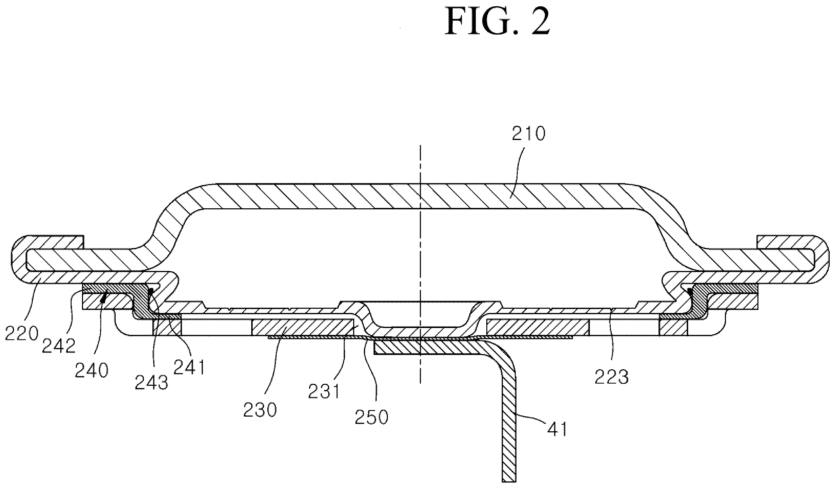

FIG. 2 is a schematic cross-sectional view illustrating a cap assembly 200 according to an embodiment of the present disclosure.

The cap assembly 200 is coupled to the opening of the cylindrical case 50. For example, when the opening of the cylindrical case 50 is provided at the top of the cylindrical case 50, the cap assembly 200 is coupled to the top of the cylindrical case 50. For example, when the opening of the cylindrical case 50 is provided at the bottom of the cylindrical case 50, the cap assembly 200 is coupled to the bottom of the cylindrical case 50.

The cap assembly 200 seals the inside of the cylindrical case 50. As described with respect to FIG. 1, the cylindrical lithium-ion secondary battery 100 includes the electrode assembly 40 and the electrolyte that are stored inside the cylindrical case 50. The cap assembly 200 enables the electrode assembly 40 and the electrolyte to be stably stored inside the cylindrical case 50.

In addition, the cap assembly 200 prevents heat from being transferred to an adjacent secondary battery or prevents explosion of the cylindrical lithium-ion secondary battery 100. In addition, the cap assembly 200 is electrically connected to the electrodes (e.g., the positive electrode 10 and/or the negative electrode 20 described in FIG. 1) extending from the electrode assembly 40. The electrodes of the cap assembly 200 are electrically connected to an external device so that the cylindrical lithium-ion secondary battery 100 may receive or supply a current from or to the external device.

To this end, the cap assembly 200 includes cap down 230 and vent 220 positioned at one side of the cap down 230.

In addition, the cap assembly 200 may further include a cap up 210 provided in a direction opposite to the cap down 230 with respect to the vent 220. In addition, the cap assembly 200 further includes an insulator 240 provided between the vent 220 and the cap down 230. In addition, the cap assembly 200 may further include a sub-plate 250 that connects the cap assembly 200 to the cylindrical lithium-ion secondary battery 100.

Hereinafter, components of the cap assembly 200 will be described through an example in which the cap assembly 200 is coupled to the opening formed at the top of the cylindrical case 50.

The cap up 210 may be positioned at the uppermost side of the cap assembly 200. The cap up 210 is formed to protrude convexly upward. The cap up 210 includes a terminal portion that connects a protruding portion to an external circuit. The cap up 210 may further include one or more outlets for discharging gas to the periphery of the terminal portion.

The cap down 230 is positioned under the cap up 210. The cap down 230 may form one or more holes 231 in at least a portion thereof.

The vent 220 is positioned between the cap up 210 and the cap down 230. The vent 220 may be formed convexly downward. The vent 220 includes one or more notches 221 . Each of the one or more notches 221 may be, for example, positioned in at least a portion of an area of the vent 220 formed convexly downward. The vent 220 may discharge a gas generated inside the cylindrical lithium-ion secondary battery 100 to the outside of the cylindrical case 50 through the one or more notches 221.

For example, when the cylindrical lithium-ion secondary battery 100 is overcharged and/or the cylindrical lithium-ion secondary battery 100 operates abnormally, gas may be generated inside the cylindrical lithium-ion secondary battery 100. In this case, an internal pressure of the cylindrical case 50 increases due to the gas. When the internal pressure of the cylindrical lithium-ion secondary battery 100 increases, the vent 220 may be deformed so that the area formed convexly downward faces upward due to the pressure. Therefore, the vent 220 may be electrically disconnected with the electrode assembly 40. In addition, the vent 220 may be cut along the one or more notches 221. While the vent 220 is cut, the vent 220 discharges the gas from inside the cylindrical case 50 to the outside of the cylindrical case 50. Therefore, the cap assembly 200 can prevent explosion of the cylindrical lithium-ion secondary battery 100.

The insulator 240 is positioned between the cap down 230 and the vent 220. For example, the insulator 240 is positioned at an edge between the cap down 230 and the vent 220. For example, the insulator 240 may be formed in a ring shape that surrounds the edge between the cap down 230 and the vent 220. Therefore, the insulator 240 forms a gap between the cap down 230 and the vent 220.

The insulator 240 electrically insulates the cap down 230 to the vent 220. For example, the insulator 240 may include a resin material such as polyethylene (PE), polypropylene (PP), polyethylene terephthalate (PET), etc.

The insulator 240 may melt, for example, when an internal temperature of the cylindrical case 50 rises. In this case, the gas generated inside the cylindrical case 50 flows into the gap between the cap down 230 and the vent 220. The introduced gas increases a pressure in the gap between the cap down 230 and the vent 220, thereby causing the vent 220 to be ruptured by the pressure. The gas may be discharged to the outside through the vent 220 that is ruptured. Therefore, the gas generated inside the cylindrical case 50 is discharged to the outside of the cylindrical case 50.

The sub-plate 250 is positioned below the cap down 230. The sub-plate may be fixed to a lower surface of the cap down 230 to block the one or more holes 231 formed in the cap down 230. In addition, the sub-plate 250 may fix an area of the vent 220 formed convexly downward or may be electrically connected to the corresponding area.

In addition, the sub-plate 250 is positioned at the top of the electrode assembly 40. The sub-plate 250 may be connected to a tab 41 that extends from the electrode assembly 40. For example, the sub-plate 250 may have one surface in contact with the vent 220 and/or the cap down 230 and the other surface in contact with the tab 41. In this case, the sub-plate 250 may also be bonded to the tab 41 through welding. In this case, the tab 41 is electrically connected to each of the positive electrode 10 and/or the negative electrode 20 described in FIG. 1 and is formed to extend from each of the positive electrode 10 and/or the negative electrode 20. For example, the tab 41 includes a positive tab that is bonded to a positive electrode plate of the positive electrode 10 and extends from the positive electrode plate upward from the electrode assembly 40 to be connected to the sub-plate 250.

With this configuration, the cap assembly 200 according to an embodiment of the present disclosure can prevent explosion of the cylindrical lithium-ion secondary battery 100.

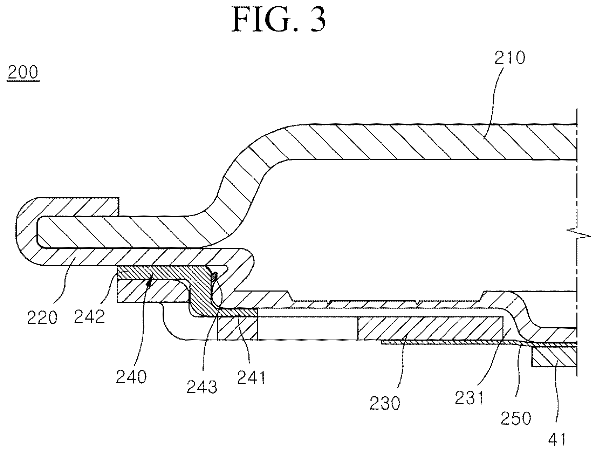

FIG. 3 is a schematic cross-sectional view illustrating part of the cap assembly 200 including the insulator 240 according to an embodiment of the present disclosure.

As illustrated in FIG. 3, the cap assembly 200 may include the cap up 210. The cap up 210 is formed convexly toward an upper side of the cap assembly 200.

In addition, the cap assembly 200 includes the vent 220. The vent 220 is formed convexly toward a lower side of the cap assembly 200. Therefore, the cap up 210 and the cap down 220 may be formed convexly in opposite directions. The cap up 210 and the cap down 220 may form a void while the areas that are convex in the opposite directions are spaced apart from each other. In this case, the area of the vent 220 formed convexly downward is conveniently referred to as a vent main body.

The vent 220 includes a vent extension that extends from the vent main body to surround an outer circumferential surface of the cap up 210. The vent extension is formed to extend outward from the vent main body. The vent extension may be in contact with the cap up 210 while extending toward the cap up 210. The vent extension includes a vent bottom extension in contact with a lower surface of an edge portion of the cap up 210.

In addition, the vent extension includes a vent top extension that extends from the vent bottom extension, surrounds the outer circumferential surface of the cap up 210, and then is in contact with an upper surface of the edge portion of the cap up 210.

In addition, the cap assembly 200 includes the cap down 230. As illustrated in FIG. 3, the cap down 230 is formed convexly downward so that the vent 220 may be inserted thereinto. Therefore, the vent main body is inserted into the area of the cap down 230 that is convex downward.

In addition, the cap assembly 200 includes the insulator 240. As illustrated in FIG. 3, the insulator 240 is provided between the vent 220 and the cap down 230.

As shown in FIG. 3, the insulator 240 includes a main body 241 that surrounds an outer circumferential surface of the vent 220. The main body 241 provides, for example, a space into which the vent 220 is inserted to surround the outer circumferential surface of the vent 220. For example, the main body 241 may be formed in a ring shape with an open central portion so that the vent main body may be inserted thereinto. The insulator 240 may be fitted along the outer circumferential surface of the vent main body via the main body 241. In addition, the insulator 240 may be provided between the vent 220 and the cap down 230 by inserting the vent 220 into which the insulator 240 is fitted into the cap down 230.

The insulator 240 couples the cap down 230 to the vent 220 while the vent 220, inserted into the main body 241, rotates with respect to the cap down 230. In this way, the insulator 240 can increase binding strength between the cap down 230 and the vent 220 because the insulator 240 rotates between the cap down 230 and the vent 220 while being forcibly fitted into the vent 220.

In this case, as illustrated in FIG. 3, the void may be formed between the insulator 240 and the vent 220. Such a void may weaken binding strength between the vent 220, the insulator 240, and the cap down 230.

Therefore, the insulator 240 according to an embodiment of the present disclosure provides a solution to such a problem.

The insulator 240 may include a plurality of the protrusions 243. The plurality of protrusions 243 may be, for example, formed to protrude toward the vent 220. For example, the plurality of protrusions 243 may be formed to protrude from the main body 241 towards the vent 220. For example, the plurality of protrusions 243 may be formed to protrude from a portion of an inner circumferential surface of the main body 241 to a central portion of the insulator 240 (e.g., extending in a direction oriented from a lower portion of the lateral sidewall connecting a top portion 242 (see FIG. 3) of the insulator 240 to the main body 241 or extending from the main body 241 to contact (e.g., directly contact) the vent 220).

As described above, the insulator 240 is forcibly fitted into the vent 220 and then rotated so that the vent 220 and the cap down 240 are coupled. In this case, as illustrated in FIG. 3, the plurality of protrusions 243 may be inserted into the void formed between the insulator 240 and the vent 220 by the rotation. Therefore, the insulator 240 can fill all voids formed between the insulator 240 and the vent 220 or minimize the sizes of the voids.

When viewed from the top (e.g., viewed from above in the orientation of FIG. 1), the vent 220 and the cap down 230 are formed in a circular shape. Therefore, the plurality of protrusions 243 may be formed to be spaced a regular interval from each other. In addition, the plurality of protrusions 243 may all be formed in the same shape. Therefore, the plurality of protrusions 243 may provide the same binding strength to the vent 220 and the cap down 230 regardless of a direction. However, the intervals or shapes between the plurality of protrusions 243 may vary depending on the shapes of the vent 220 and the cap down 230. For example, when the vent 220 and the cap down 230 are formed in a different shape from a circular shape when viewed from the top, the plurality of protrusions 243 may be formed in different intervals or shapes to provide the same binding strength in all directions.

Therefore, the cap assembly 200 according to an embodiment of the present disclosure may propose a method of increasing binding strength between internal components. For example, the cap assembly 200 can increase binding strength between the vent 220, the insulator 240, and the cap down 230.

In this way, when the binding strength between the internal components increases, rotation occurring between components of the cap assembly 200 is reduced. For example, the insulator 240 can prevent mutual rotation of the vent 220 and the cap down 230. Therefore, cracking cannot occur in welded portions formed by welding the vent 220, the cap down 230, and the sub-plate 250. In addition, therefore, the cap assembly 200 can improve the reliability of the cylindrical lithium-ion secondary battery 100 including the cap assembly 200.

Hereinafter, a structure of the insulator 240 will be described in more detail.

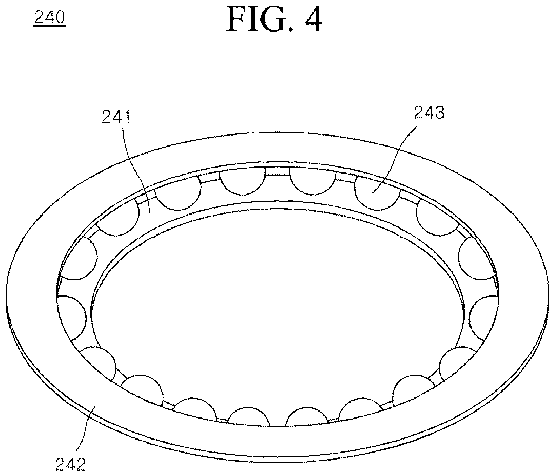

FIG. 4 is a schematic view illustrating the insulator 240 according to an embodiment of the present disclosure.

As described above, the cap assembly 200 includes the cap down 230, the vent 220 positioned above the cap down 230, and the insulator 240 that is positioned between the cap down 230 and the vent 220 and includes the one or more protrusions 243 that protrude toward the vent 220.

In addition, the insulator 240 includes the main body 241 that surrounds the outer circumferential surface of the vent 220. The main body 241 is fitted into the vent 220 to surround the vent 220.

The plurality of protrusions 243 are formed to protrude from the main body 241.

For example, the plurality of protrusions 243 protrudes from the inner circumferential surface of the main body 241 to the inside of the insulator 240. For example, the plurality of protrusions 243 protrude from the inner circumferential surface of the main body 241 at an angle of 60° to 120°. In other embodiments, for example, the plurality of protrusions 243 protrudes from the inner circumferential surface of the main body 241 at an angle of 70° to 110°. As another example, the plurality of protrusions 243 protrude from the inner circumferential surface of the main body 241 at an angle of 80° to 100°. As still another example, the plurality of protrusions 243 protrude from the inner circumferential surface of the main body 241 at an angle of 90°. The plurality of protrusions 243 protrudes from the main body 241 at an angle of such a range with respect to the main body 241 to better enter the void formed between the insulator 240 and the vent 220.

For example, the plurality of protrusions 243 protrude from the inner circumferential surface of the main body 241 at the same height (e.g., on a same plane). In this context, "height" is from the bottom of the case 50 upward as shown in FIG. 1. Therefore, the insulator 240 may apply a force to the vent 220 uniformly in all directions. However, depending on the shapes of the vent 220 and/or the cap down 230, the plurality of protrusions 243 may protrude from the inner circumferential surface of the main body 241 at different heights (e.g., different angles).

The plurality of protrusions 243 are formed so that the lower side connected to the main body 241 is wider than the upper side positioned away from the main body 241. For example, the plurality of protrusions 243 may be formed so that the bottom of the plurality of protrusions 243 is thicker than the top of the plurality of protrusions 243. In other embodiments, for example, when viewed from the top, the plurality of protrusions 243 may be formed in a shape that narrows from the bottom of the plurality of protrusions 243 to the top of the plurality of protrusions 243.

The plurality of protrusions 243 protrudes from the main body 241. Therefore, the bottom of the plurality of protrusions 243 connected to the main body 241 is formed relatively wider to be firmly connected to the main body 241.

The plurality of protrusions 243 protrude from the main body 241 and are inserted into the void formed between the vent 220 and the insulator 240. Therefore, the bottom of the plurality of protrusions 243 positioned away from the main body 241 is formed to be relatively narrow and flexibly inserted into the void.

Therefore, the plurality of protrusions 243 may be formed to have the bottom wider than the top, thereby increasing the binding strength between the vent 220 and the cap down 230 and at the same time, increasing the manufacturing process efficiency of the cap assembly 200.

The plurality of protrusions 243 may include, for example, 2 to 16 protrusions. In other embodiments, the plurality of protrusions 243 include, for example, 4 to 16 protrusions. In other embodiments, the plurality of protrusions 243 include, for example, 2 to 12 protrusions. In other embodiments, the plurality of protrusions 243 include, for example, 4 to 12 protrusions. In other embodiments, the plurality of protrusions 243 include, for example, 2 to 8 protrusions. In other embodiments, the plurality of protrusions 243 include, for example, 4 to 8 protrusions.

The plurality of protrusions 243 is formed to protrude from a limited area, that is, the main body 241. Therefore, when the number of protrusions 243 increases, each of the plurality of protrusions 243 is relatively small in size. Therefore, when the insulator 240 includes a larger number of protrusions 243, strengths of the plurality of protrusions 243 that support and/or press the vent 220 and/or the cap down 230 decrease. Therefore, when the number of protrusions 243 included in the insulator 240 exceeds 16, rotation may occur between the vent 220 and the cap down 230 even when the insulator 240 is inserted.

In addition, the plurality of protrusions 243 is formed to protrude from a limited area, that is, the main body 241. Therefore, when the number of protrusions 243 decreases, each of the plurality of protrusions 243 is relatively large in size. Therefore, when the insulator 240 includes a fewer number of protrusions 243, strengths of the plurality of protrusions 243 that push the vent 220 increase. Therefore, when the number of protrusions 243 including the insulator 240 is less than 2, the vent 220 cannot be inserted into the insulator 240 including the plurality of protrusions 243 or an insertion process can become excessively difficult.

Therefore, the plurality of protrusions 243 include, for example, 2 to 16 protrusions.

The insulator 240 may further include a top insulating portion 242 (see FIG. 3) that extends outward from the top of an outer circumferential surface of the main body 241. The top insulating portion 242 is bent in a direction in which the main body 241 is formed and extends outward. The top insulating portion 242 is, for example, provided between the vent extension of the vent 220 and the cap down 230. Therefore, the top insulating portion 242 can more effectively insulate the vent 220 from the cap down 230.

With this structure, the insulator 240 according to an embodiment of the present disclosure can effectively increase the binding strength between the vent 220 and the cap down 230. Hereinafter, various embodiments of the insulator 240 will be described.

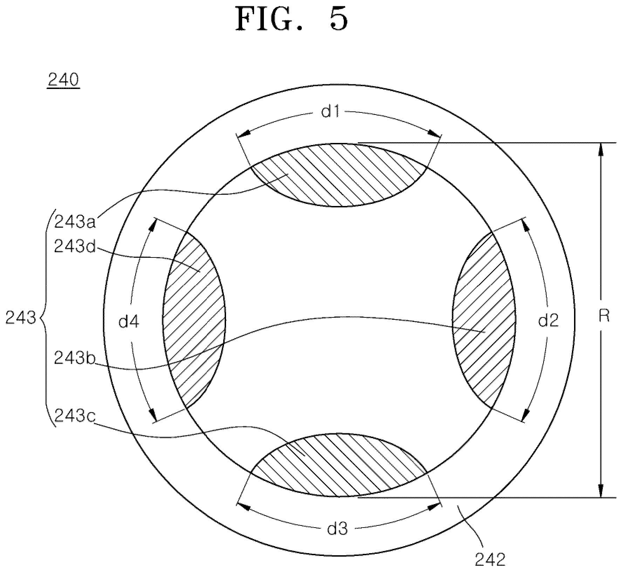

FIG. 5 is a schematic top view illustrating the insulator 240 according to an embodiment of the present disclosure.

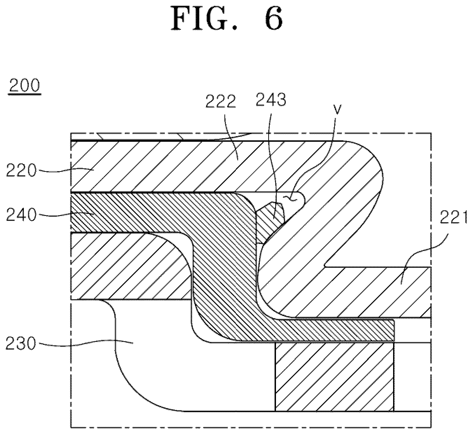

FIG. 6 is a schematic cross-sectional view illustrating part of the cap assembly 200 including the insulator 240 according to an embodiment of the present disclosure.

The insulator 240 includes, for example, the main body 241 that is formed in a ring shape and surrounds the outer circumferential surface of the vent 220.

The insulator 240 couples the cap down 230 to the vent 220 while the vent 220, inserted into the main body 241, rotates with respect to the cap down 230. All or some of the plurality of protrusions 243 move and are positioned in the void v formed between the main body 241 and the vent 220 by the rotation.

The insulator 240 may include the plurality of protrusions 243. The plurality of protrusions 243 are formed to protrude from the main body 241. The plurality of protrusions 243 are formed so that the lower side connected to the main body 241 is wider than the upper side positioned away from the main body 241.

When viewed from the top, the sum of lengths of the bottoms of the plurality of protrusions 243 ranges from 60 to 80% of the circumference of the inner circumferential surface of the main body 241.

As illustrated in FIG. 6, the void v may be formed between the insulator 240 and the vent 220. For example, the vent 220 includes a vent main body 221 and a vent extension 222. In this case, the vent extension 222 may be bent and may extend from the vent main body 221. For example, the bending may be formed in a Z-shape as illustrated in FIG. 6. However, the bent shape may vary.

In this way, as the vent 220 is bent and extends from the vent main body 221 to the vent extension 222, the void v may be formed between the vent 220 and the insulator 240. In FIGS. 5 and 6, a method of allowing the plurality of protrusions 243 of the insulator 240 to better move to the void v will be described.

FIG. 5 illustrates a top view of the insulator 240FIG. 5 illustrates an example in which the insulator 240 includes four of the protrusions 243. However, it will be understood that the number of protrusions 243 formed on the insulator 240 may vary.

The plurality of protrusions 243 include a first protrusion 243a, a second protrusion 243b, a third protrusion 243c, and a fourth protrusion 243d. In this case, when viewed from the top, a length of the bottom of the first protrusion 243a is d1. In addition, when viewed from the top, a length of the bottom of the second protrusion 243b is d2. In addition, when viewed from the top, a length of the bottom of the third protrusion 243c is d3. In addition, when viewed from the top, a length of the bottom of the fourth protrusion 243d is d4.

That is, when viewed from the top, the sum of the lengths of the bottoms of the plurality of protrusions 243 may be represented as the sum of d1, d2, d3, and d4. For example, when the plurality of protrusions 243 include n protrusions, the sum of the lengths of the bottoms of the plurality of protrusions 243 may be represented by Expression 1 below.

[Expression 1]

$$d = \sum_{m=1}^{n} d_m$$

In this case, in Expression 1, d denotes the sum of the lengths of the bottoms of the plurality of protrusions 243.

In this case, in Expression 1, n is the number of protrusions 243 in the plurality of protrusions 243.

In this case, $d_m$ is the length of the bottom of each of the plurality of protrusions 243.

Meanwhile, a diameter (e.g., an inner diameter) of the main body 241 is denoted as R, a length of the circumference of the inner circumferential surface of the main body 241 may be represented by $\pi R$. For convenience, such a length of the circumference is denoted as D.

When the sum d of the plurality of protrusions 243 is less than 60% of the length D of the circumference of the inner circumferential surface, the strengths of the plurality of protrusions 243 for the binding between the vent 220 and the cap down 230 may be insufficient. In addition, when the sum d of the plurality of protrusions 243 exceeds 80% of the length D of the circumference of the inner circumferential surface, the vent 220 cannot be easily inserted into the insulator 240.

Therefore, the sum d of the lengths of the bottoms of the plurality of protrusions 243 may satisfy Expression 2 below.

[Expression 2]

$$0.6D \le d \le 0.8D$$

Each of the plurality of protrusions 243 is formed with a thickness of 10% to 30% of a height of the main body 241. In this case, the thickness of the plurality of protrusions 243 is a value measured based on a thickness of the bottom of the plurality of protrusions 243 (e.g., the portion of each of the plurality of protrusions 243 closest to the main body 241).

When the plurality of protrusions 243 are formed with a thickness that exceeds 30% of the height of the main body 241, the vent 220 cannot be easily inserted into the insulator 240. In addition, even when the vent 220 is inserted into the insulator 240, the fluidity of the plurality of protrusions 243 is lowered, making it difficult for the plurality of protrusions 243 to move to the void v formed between the vent 220 and the insulator 240.

When the plurality of protrusions 243 are formed with a thickness less than 10% of the height of the main body 241, the strengths of the plurality of protrusions 243 are weakened. Therefore, even when the plurality of protrusions 243 moves to the void, there is a problem that strength that prevents rotation between the vent 220 and the cap down 230 is weakened.

Therefore, each of the plurality of protrusions 243 is formed with a thickness of 10% to 30% of the height of the main body 241. For example, the plurality of protrusions 243 is formed with a thickness of 0.07 mm or more. In other embodiments, for example, the plurality of protrusions 243 may be formed with a thickness of 0.1 mm or more.

With this structure, the insulator 240 according to an embodiment of the present disclosure can increase the binding strength between the vent 220 and the cap down 230 and prevent mutual rotation of the vent 220 and the cap down 230. In addition, the insulator 240 can increase binding strength, thereby preventing cracking in welded portions between the vent 220, the cap down 230, and the sub-plate 250. Therefore, the cap assembly 200 according to an embodiment of the present disclosure can improve the reliability and/or stability of the cap assembly and cylindrical lithium-ion secondary battery 100 including the cap assembly.

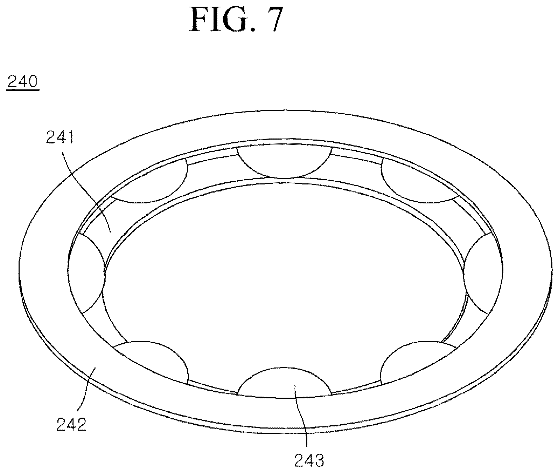

FIG. 7 is a schematic top view illustrating an insulator 240 according to another embodiment of the present disclosure.

FIG. 4 illustrates an example in which the insulator 240 includes 16 of the plurality of protrusions 243. FIG. 7 illustrates an example in which the insulator 240 includes 8 of the plurality of protrusions 243. In this way, when the number of the plurality of protrusions 243 included in the insulator 240 decreases, the size of the plurality of protrusions 243 may be large. For example, a volume of the plurality of protrusions 243 may be increased.

In this way, when the size of the plurality of protrusions 243 increases, the plurality of protrusions 243 can further increase the binding strength between the vent 220 and the cap down 230.

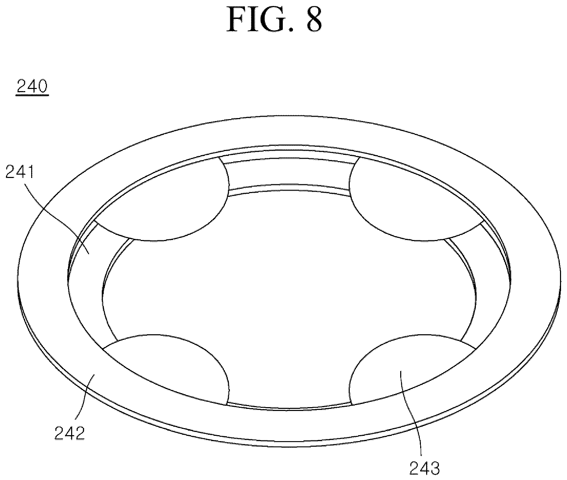

FIG. 8 is a schematic top perspective view illustrating an insulator 240 according to another embodiment of the present disclosure.

FIG. 4 illustrates an example in which the insulator 240 includes 16 of the plurality of protrusions 243. FIG. 7 illustrates an example in which the insulator 240 includes 8 of the plurality of protrusions 243. FIG. 8 illustrates an example in which the insulator 240 includes 4 of the plurality of protrusions 243. In this way, when the number of the plurality of protrusions 243 included in the insulator 240 decreases, the size of each of the plurality of protrusions 243 may be increased. For example, the volume of the plurality of protrusions 243 may be increased.

In this way, when the size of the plurality of protrusions 243 is increased, the plurality of protrusions 243 can further increase the binding strength between the vent 220 and the cap down 230.

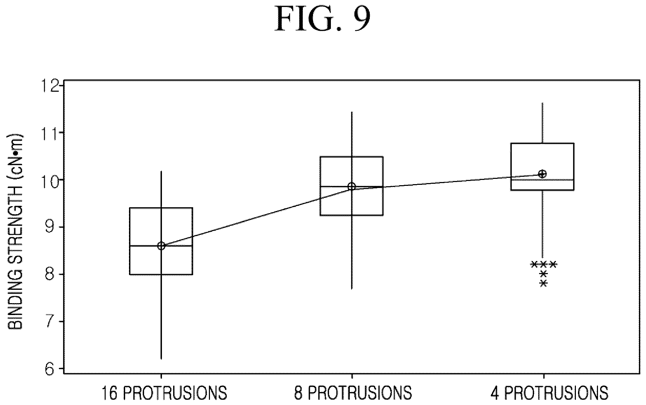

FIG. 9 is a graph that compares binding strengths between the vent and the cap down according to the number of protrusions in the cap assembly to which the insulator according to an embodiment of the present disclosure is applied.

In FIG. 9, a y-axis represents the binding strength (cN·m) between the vent 220 and the cap down 230. In this case, the binding strength is a torque value measured when an external pressure is generated in a rotation direction of the vent 220 with respect to the cap down 230.

In addition, FIG. 9 illustrates binding strengths measured when the number of the plurality of protrusions 243 included in the insulator 240 is 16, 8, and 4. According to the result of FIG. 9, it can be seen that when the insulator 240 includes the plurality of protrusions 243, binding strengths are provided between the vent 220 and the cap down 230. In addition, it can be seen that as the number of the plurality of protrusions 243 increases, binding strengths are increased. On the other hand, when the plurality of protrusions 243 are formed on the entire circumference of the inner circumferential surface of the main body 241 when viewed from the top, binding strength could not be measured because the vent 220 was not inserted into the insulator 240.

An embodiment of the present disclosure relates to a cap assembly and/or a secondary battery that increase binding strength between components included in the cap assembly.

An embodiment of the present disclosure also relates to a cap assembly and/or a secondary battery that are capable of preventing cracking inside a cap assembly.

According to the present disclosure, it is possible to prevent the occurrence of a short circuit in a cap assembly.

According to the present disclosure, it is possible to improve the performance of a secondary battery.

According to the present disclosure, it is possible to prevent the occurrence of a defective secondary battery.

Effects of the present disclosure are not limited to those described above, and other effects not specifically mentioned herein will be clearly understood by those of ordinary skill in the art from the description of the present disclosure below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

**Claims**

1. A cap assembly, comprising:

a cap down;
a vent above the cap down; and

an insulator between the cap down and the vent, the insulator including one or more protrusions protruding toward the vent.

2. The cap assembly as claimed in claim 1, wherein:

   the insulator includes a main body having a ring shape, the main body surrounding an outer circumferential surface of the vent, and
   the one or more protrusions protrude from the main body.

3. The cap assembly as claimed in claim 2, wherein each of the one or more protrusions has a thickness of 10% to 30% of a height of the main body.

4. The cap assembly as claimed in claim 1, 2 or 3, wherein the cap down and the vent are coupled by the insulator, the vent being rotatable with respect to the cap down.

5. The cap assembly as claimed in claim 2, 3 or 4, wherein the one or more protrusions are movable, the one or more protrusions being in a void between the main body and the vent.

6. The cap assembly as claimed in claim 2 to 5, wherein a lower side of each of the one or more protrusions connected to the main body is wider than an upper side of each of the one or more protrusions.

7. The cap assembly as claimed in claim 6, wherein a sum of lengths of the lower side of each of the one or more protrusions ranges from 60% to 80% of a length of a circumference of an inner circumferential surface of the main body.

8. The cap assembly as claimed in any preceding claim, wherein each of the one or more protrusions has a thickness of 0.07 mm or more.

9. The cap assembly as claimed in any preceding claim, wherein the one or more protrusions include 4 to 16 protrusions.

10. A secondary battery, comprising:

    a case configured to accommodate an electrode assembly; and
    the cap assembly according to any preceding claim,
    wherein the cap assembly is coupled to an opening of the case.

# FIG. 1

# FIG. 2

# FIG. 3

240

# FIG. 4

241

243

242

# FIG. 5

# FIG. 6

## FIG. 7

240

241

242

243

# FIG. 8

<u>240</u>

241

242

243

# FIG. 9

Europäisches
Patentamt

European
Patent Office

Office européen
des brevets

# EUROPEAN SEARCH REPORT

**Application Number**

EP 25 18 4116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/061310 A1 (KIM YONG-SAM [KR] ET AL) 5 March 2009 (2009-03-05) * paragraphs [0042] - [0140]; figures 1-12 * ----- | 1-10 | INV. H01M50/107 H01M50/152 H01M50/171 H01M50/184 H01M50/186 |
| X | US 2015/287965 A1 (KIM DAE-KYU [KR] ET AL) 8 October 2015 (2015-10-08) * paragraphs [0043] - [0130]; figures 1-8 * ----- | 1-10 | |

**TECHNICAL FIELDS SEARCHED (IPC)**

H01M

The present search report has been drawn up for all claims

| Place of search | Date of completion of the search | Examiner |
|---|---|---|
| Munich | 12 September 2025 | Tsipouridis, P |

EPO FORM 1503 03.82 (P04C01)

## ANNEX TO THE EUROPEAN SEARCH REPORT
## ON EUROPEAN PATENT APPLICATION NO.

EP 25 18 4116

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2025

| Patent document cited in search report | Publication date | Patent family member(s) | | Publication date |
|---|---|---|---|---|
| US 2009061310 A1 | 05-03-2009 | KR | 100882916 B1 | 10-02-2009 |
| | | US | 2009061310 A1 | 05-03-2009 |
| US 2015287965 A1 | 08-10-2015 | EP | 2930764 A1 | 14-10-2015 |
| | | KR | 20150116700 A | 16-10-2015 |
| | | US | 2015287965 A1 | 08-10-2015 |

EPO FORM P0459

For more details about this annex : see Official Journal of the European Patent Office, No. 12/82